# EUROPEAN PATENT SPECIFICATION

(11) **EP 1 838 739 B1**
(45) Date of publication and mention of the grant of the patent: **08.07.2009**
(21) Application number: 05815737.1
(22) Date of filing: 02.12.2005
(51) Int. Cl.: C08F 2/18, C08F 2/44, C08F 6/10, C08L 101/00, C08J 9/20

(54) **CHEMICAL COMPOSITION AND PROCESS**
CHEMISCHE ZUSAMMENSETZUNG UND VERFAHREN
PRÉPARATION CHIMIQUE ET PROCÉDÉ

(30) Priority: 22.12.2004 EP 04106824
(43) Date of publication of application: 03.10.2007
(73) Proprietor: Akzo Nobel N.V., 6800 SB Arnhem (NL); EKA CHEMICALS AB, 445-80 Bohus (SE)
(72) Inventor: BERGENUDD, Helena, S-SE-854 67 Sundsvall (SE); STENBERG, Eva, S-SE-864 33 Matfors (SE); NORDIN, Jan, S-SE-862 32 Kvissleby (SE)
(74) Representative: Schalkwijk, Pieter Cornelis
(86) International application number: PCT/SE2005/001821
(87) International publication number: WO 2006/068573

(56) References cited:
- EP-A- 0 486 080

## Description

The present invention relates to an aqueous slurry comprising thermally expandable microspheres, a process for its preparations, use thereof for the production of paper or non-woven, and a process for the production of paper or non-woven.

Expandable thermoplastic microspheres comprising a thermoplastic polymer shell and a propellant entrapped therein are commercially available under the trademark EXPANCEL^{®} and are used as a foaming agent in many different applications.

In such microspheres, the propellant is normally a liquid having a boiling temperature not higher than the softening temperature of the thermoplastic polymer shell. Upon heating, the propellant evaporates to increase the internal pressure at the same time as the shell softens, resulting in significant expansion of the microspheres. The temperature at which the expansion starts is called Tₛₜₐᵣₜ, while the temperature at which maximum expansion is reached is called Tₘₐₓ. Expandable microspheres are marketed in various forms, e.g. as dry free flowing particles, as an aqueous slurry or as a partially dewatered wet-cake.

Expandable microspheres can be produced by polymerising ethylenically unsaturated monomers in the presence of a propellant. Detailed descriptions of various expandable microspheres and their production can be found in, for example, US Patents 3615972, 3945956, 5536756, 6235800, 6235394 and 6509384, and in EP 486080.

One important application for expandable microspheres is paper making as described in e.g. US Patents 3556934 and 4133688, JP Patent 2689787, International patent application PCT/2004/000835 and in Ö. Söderberg, "World Pulp & Paper Technology 1995/96, The International Review for the Pulp & Paper Industry" p. 143-145.

In some applications like paper making or production of non-woven, it is advantageous to add the microspheres as an aqueous slurry. However, it has been found difficult to provide a stable slurry in which the microspheres do not sediment to an unacceptable extent, particularly after some time of storage or transport.

It is thus an object of the invention to provide an aqueous slurry of high stability comprising expandable microspheres.

It is another object of the invention to provide a process for the production of paper or nonwoven with low bulk density.

One aspect of the invention concerns an aqueous slurry comprising a thickener and thermally expandable microspheres comprising a thermoplastic polymer shell and a propellant entrapped therein, said slurry having a pH of at least about 2.5, preferably at least about 3, and comprising a buffer having a pKₐ within about ± 1 pH-unit, preferably at least about ± 0.5 pH-unit of the actual pH. In the case the buffer has more than one pKₐ, at least one of them should be in the above specified range. Most preferably the pH is up to about 10, particularly most preferably up to about 6, for example from about 2.5 to about 10 or from about 3 to about 6.

It has been found that the efficiency of many types of thickeners is pH-dependent and that many types of particularly polymeric thickeners deteriorate if the pH of the slurry goes beyond the desired range, particularly if the pH becomes too low. It has also been found that in an aqueous slurry comprising expandable thermoplastic microspheres the pH is not always stable but may change due to release of substances from the microspheres, such as remaining monomers or degradation products thereof. It has now been found possible to overcome this problem by including a buffer with a pKₐ close to the pH of the slurry, which can be achieved by including a separate buffer, by selecting a polymeric thickener also acting as a buffer with a suitable pKₐ as specified above, or a combination thereof with one or more of each. If necessary, the pH of the slurry may be regulated to a desired value by the addition of any suitable acid or alkaline substance, such as hydrogen chloride, acetic acid, alkali metal hydroxide, ammonia or the like.

The buffer is preferably present in an amount sufficient to stabilise the slurry at a pH within at least about ± 1 pH-unit, more preferably at least about ± 0.5 pH-unit, most preferably at least about ±0.2 pH-units. The exact amount of buffer depends on the substance used and may, for example be from about 0.5 to about 5 wt%, most preferably from about 1 % to about 3 wt%.

Any inorganic or organic buffer with a suitable pKₐ may be used. All buffers may be in the form of an acid, a base or a salt thereof, such as alkali metal or any other metal salt.

Examples of useful buffers include inorganic substances like hydrogen carbonate, dihydrogen phosphate, inorganic derivatives of hydrogen carbonate and hydrogen phosphate, and mixtures thereof, of which hydrogen carbonate and dihydrogen phosphate are particularly preferred.

Other examples of buffers include organic substances like acetate and derivatives, other carboxylates, amines containing electron releasing groups, polymers having functional groups such as carboxylate, phosphate, phosphonate or amine and preferably also acting as thickener, and mixtures thereof. Examples of acetate derivatives include phenyl acetate, 2-nitrobenzeneacetate, acetoacetate, nitrilotriacetate and mixtures thereof. Examples of other carboxylates include formate, propionate and its derivatives, the conjugate ion of butanoic acid and its derivatives, the conjugate ion of pentanoic acid and its derivatives, the conjugate ion of adipic acid, oxalate, citrate, tartrate, malate, succinate, glycylglycine, benzoate, phthalate, bis-tris, 2-naphtalenecarboxylate, and mixtures thereof. In most cases metal salts, e.g. alkali metal salts, are preferred. Particularly preferred organic buffers include salts of acetate, oxalate, citrate, succinate or phenyl acetate.

As thickener any substance increasing the viscosity can be used, for example inorganic particles or at least partially water soluble polymers that can be of associative nature (interacting with the microspheres and forming a network) or non-associative nature (stabilising the slurry by increasing the viscosity of the aqueous phase) or a combination of these substances. The polymers may optionally be amphiphilic, may be straight chained, branched or cross-linked and can be positively charged, negatively charged or neutral. The average molecular weight can vary within wide limits, depending on the kind of polymer. In most cases the preferred average molecular weight is at least about 500, more preferably at least about 2000 and most preferably at least about 5000. The upper limit is not critical and in most cases the average molecular weight is preferably up to about 50 000 000, more preferably up to about 10 000 000, most preferably up to about 1 000 000.

Examples of inorganic particles that can be used as thickener include colloidal silica, chalk, bentonite, laponite, kaolinite, other colloidal clays, and/or one or more salts, oxides or hydroxides of metals like Al, Ca, Mg, Ba, Fe, Zn, Ni and Mn, for example one or more of calcium phosphate, calcium carbonate, magnesium hydroxide, barium sulphate, calcium oxalate, and hydroxides of aluminium, iron, zinc, nickel or manganese. Particles of inorganic oxides may be used alone or in combination with any kind of polymeric thickener.

Examples of polymers that can be used as thickener include polysaccharides derived from any of the polysaccharides known in the art including, for example, starch, gums, celluloses, chitins, chitosans, glycans, galactans, pectins, mannans, dextrins, and mixtures thereof, among which starches, gums, and celluloses and mixtures thereof are particularly preferred. Starches may be anionic or cationic and examples of suitable starches include potato, corn, wheat, tapioca, rice, waxy maize, etc. and mixtures thereof, of which starch from potato, corn and mixtures thereof are particularly preferred. Examples of suitable gums include guar gums, tamarind gums, locust bean gums, tare gums, karaya, okra, acacia, xanthan gums etc. and mixtures thereof, of which guar gums are particularly preferred. Examples of suitable cellulose include derivatives such as optionally chemically modified CMC (carboxymethyl cellulose) and cellulose ethers like EHEC (ethyl hydroxyethyl cellulose) and HEC (hydroxyethyl cellulose), and mixtures thereof. Other polymers that can be used include polyacrylic acid, esters and amides and co-polymers thereof, polymethacrylic acid, esters and amides and co-polymers thereof, rubber latexes such as styrene/butadiene copolymers, acrylonitrile/butadiene copolymers, poly(vinyl chloride) and copolymers, poly(vinyl ester) such as poly(vinyl acetate) and co-polymers (e.g. with ethylene), poly(vinyl alcohol), polyamines, polyetyleneimine, polyethylene/ polypropylene oxides, polyurethane, and aminoplast and phenoplast precondensates such as urea/ formaldehyde, urea/ melamine/ formaldehyde or phenol/formaldehyde and polyamidoamine epichlorohydrin resins.

Examples of polymeric thickeners also acting as buffers with a suitable pKₐ include polymers that preferably are substituted with one or more types of functional groups such as carboxylate, phosphate, phosphonate and amine. The polymer preferably comprise a large number of functional groups per repeating unit, for example from about 0.1 to about 2, most preferably from about 0.3 to about 1.5. Examples of useful polymers include chemically modified cellulose like CMC, synthetic polymers like polyacrylic acid, polyamine and co-polymers thereof.

One or more thickeners are preferably added in an amount to stabilise the slurry against substantial sedimentation of the microspheres to an extent that they cannot be re-dispersed again. In many cases this can be achieved by adding sufficient thickener to obtain a preferred viscosity of the slurry from about 150 to about 1000 mPas at 25°C, most preferably from about 200 to about 600 mPas at 25°C (refers to measurement with an Anton Paar DV-1 P viscosimeter equipped with a spindle L3 as described in connection with the Examples). The amount required to stabilise the slurry depends on the thickener and other circumstances such as the pH and salt concentration. In many cases a preferred content of thickener in the slurry is from about 0.1 to about 15 wt%, most preferably from about 0.5 to about 10 wt%. It is preferred that the slurry can be stored for at least about 5 weeks, most preferably at least about 10 weeks and still maintain a viscosity within the above specified range.

Any thermally expandable microspheres comprising a thermoplastic polymer shell and a propellant entrapped therein may be included into the slurry, preferably in an amount from about 5 to about 55 wt%, most preferably from about 20 to about 55 wt%, particularly most preferably from about 40 to about 55 wt%. Examples of useful expandable microspheres are described below.

The thermoplastic polymer shell of the expandable microspheres is preferably made of a homo- or co-polymer obtained by polymerising ethylenically unsaturated monomers. Those monomers can, for example, be nitrile containing monomers such as acrylonitrile, methacrylonitrile, α-chloroacrylonitrile, α-ethoxyacrylonitrile, fumaronitrile or crotonitrile; acrylic esters such as methyl acrylate or ethyl acrylate; methacrylic esters such as methyl methacrylate, isobornyl methacrylate or ethyl methacrylate; vinyl halides such as vinyl chloride; vinyl esters such as vinyl acetate other vinyl monomers such as vinyl pyridine; vinylidene halides such as vinylidene chloride; styrenes such as styrene, halogenated styrenes or α-methyl styrene; or dienes such as butadiene, isoprene and chloroprene. Any mixtures of the above mentioned monomers may also be used.

Preferably the monomers comprise at least one acrylic ester or methacrylic ester monomer, most preferably methacrylic ester monomer such as methyl methacrylate. The amount thereof in the polymer shell is preferably from about 0.1 to about 80 wt%, most preferably from about 1 to about 25 wt% of the total amounts of monomers.

Preferably the monomers comprise at least one vinylidene halide monomer, most preferably vinylidene chloride. The amount thereof in the polymer shell is preferably from about 1 to about 90 wt%, most preferably from about 20 to about 80 wt% of the total amounts of monomers.

Preferably the monomers comprise at least one nitrile containing monomer, most preferably at least one of acrylonitrile and methacrylonitrile, particularly most preferably at least acrylonitrile. The amount thereof in the polymer shell is preferably from about 1 to about 80 wt%, most preferably from about 20 wt% to about 70 wt% of the total amounts of monomers.

In an embodiment the monomers comprise at least one acrylic ester monomer, at least one vinylidene halide and at least one nitrile containing monomer. The polymer shell may then, for example, be a co-polymer obtained from monomers comprising methyl methacrylate in a preferred amount from about 0.1 to about 80 wt%, most preferably from about 1 to about 25 wt% of the total amounts of monomers, vinylidene chloride in a preferred amount from about 1 to about 90 wt%, most preferably from about 20 to about 80 wt% of the total amounts of monomers, and acrylonitrile in a preferred amount from about 1 to about 80 wt%, most preferably from about 20 to about 70 wt% of the total amounts of monomers.

It may sometimes be desirable that the monomers for the polymer shell also comprise crosslinking multifunctional monomers, such as at least one of divinyl benzene, ethylene glycol di(meth)acrylate, di(ethylene glycol) di(meth)acrylate, triethylene glycol di(meth)acrylate, propylene glycol di(meth)acrylate, 1,4-butanediol di(meth)acrylate, 1,6-hexanediol di(meth)acrylate, glycerol di(meth)acrylate, 1,3-butanediol di(meth)acrylate, neopentyl glycol di(meth)acrylate, 1,10-decanediol di(meth)acrylate, pentaerythritol tri(meth)acrylate, pentaerythritol tetra(meth)acrylate, triallylformal tri(meth)acrylate, allyl methacrylate, trimethylol propane tri(meth)acrylate, tributanediol di(meth)acrylate, PEG #200 di(meth)acrylate, PEG #400 di(meth)acrylate, PEG #600 di(meth)acrylate, 3-acryloyloxyglycol monoacrylate, triacryl formal or triallyl isocyanate, triallyl isocyanurate etc. The amount thereof in the polymer shell is preferably from about 0.1 to about 10 wt%, most preferably from about 0.1 to about 1 wt%, particularly most preferably from about 0.2 to about 0.5 wt% of the total amounts of monomers.

The propellant is normally a liquid having a boiling temperature not higher than the softening temperature of the thermoplastic polymer shell and may comprise hydrocarbons such as propane, n-pentane, isopentane, neopentane, butane, isobutane, hexane, isohexane, neohexane, heptane, isoheptane, octane or isooctane, or mixtures thereof. Aside from them, other hydrocarbon types can also be used, such as petroleum ether, or chlorinated or fluorinated hydrocarbons, such as methyl chloride, methylene chloride, dichloroethane, dichloroethylene, trichloroethane, trichloroethylene, trichlorofluoromethane, perfluorinated hydrocarbons, etc. Preferred propellants comprise isobutane, alone or in a mixture with one or more other hydrocarbons. The boiling point at atmospheric pressure is preferably within the range from about -50 to about 100 °C, most preferably from about -20 to about 50 °C, particularly most preferably from about -20 to about 30 °C.

Apart from the polymer shell and the propellant the microspheres may comprise further substances added during the production thereof, normally in an amount from about 1 to about 20 wt%, preferably from about 2 to about 10 wt%. Examples of such substances are solid suspending agents, such as one or more of silica, chalk, bentonite, starch, crosslinked polymers, methyl cellulose, gum agar, hydroxypropyl methylcellulose, carboxy methylcellulose, colloidal clays, and/or one or more salts, oxides or hydroxides of metals like Al, Ca, Mg, Ba, Fe, Zn, Ni and Mn, for example one or more of calcium phosphate, calcium carbonate, magnesium hydroxide, barium sulphate, calcium oxalate, and hydroxides of aluminium, iron, zinc, nickel or manganese. If present, these solid suspending agents are normally mainly located to the outer surface of the polymer shell. However, even if a suspending agent has been added during the production of the microspheres, this may have been washed off at a later stage and could thus be substantival absent from the final product.

The expandable microspheres preferably have a volume-average diameter from about 1 to about 500 µm, more preferably from about 5 to about 50 µm, most preferably from about 15 to about 35 µm. The amount of propellant in the expandable microspheres is preferably from about 5 to about 40 wt%, more preferably from about 10 to about 40 wt%, most preferably from about 15 to about 40 wt%, particularly most preferably from about 20 to about 35 wt%.

The term expandable microspheres as used herein refers to expandable microspheres that have not previously been expanded, i.e. unexpanded expandable microspheres.

All figures for volume-average diameter given herein refer to values obtained by measuring according to ISO13320, "Particle Size Analysis - Laser Diffraction Methods - Part 1: General principles" Detailed description of this measuring method can be obtained from, for example, Swedish Institute For Standards, Stockholm.

The slurry may also comprise further components compatible with production of paper or non-woven. For example, inorganic salts such as sodium chloride may be included to increase the stability of the slurry, but may also be preferable to substantially exclude as it could be regarded as a non-desirable contamination when used in the production of paper or non-woven.

The total solids content in the slurry is preferably from about 5 to about 55 wt %, most preferably from about 20 to about 55 wt%, particularly most preferably from about 40 to about 55 wt%. Sodium chloride, or another salt, may, for example, be present in the slurry in an amount from about 0.1 to about 20 wt%, preferably from about 1 to about 15 wt%.

Another aspect of the invention concerns a process for the preparation of a slurry as described above comprising adding a polymeric thickener and a buffer, or a combined thickener and buffer, to an aqueous slurry of thermally expandable microspheres comprising a thermoplastic polymer shell and a propellant entrapped therein, and adjusting the pH to a value exceeding about 2.5 and being within about ± 1 pH-unit of a pKₐ of said buffer or combined thickener and buffer.

For various embodiments e.g. relating to the pH, viscosity, the components or combinations of components, the above description of the slurry as such is referred to.

Another aspect of the invention concerns use of a slurry as described above in the production of paper or non-woven for increasing the bulk thereof. For various embodiments relating to the slurry the above description of the slurry as such is referred to.

Still another aspect of the invention concerns a process for the production of paper or nonwoven from fibres comprising the steps of adding a slurry comprising thermally expandable microspheres as described above to a stock comprising fibres or to a web of fibres, forming paper or nonwoven from the stock or the web, and applying heat to raise the temperature of the microspheres sufficiently for them to expand and thereby increase the bulk of the paper or the nonwoven.

An embodiment of the invention concerns a process for the production of paper comprising the steps of adding a slurry comprising thermally expandable microspheres as described above to a stock containing cellulosic fibres, dewatering the stock on a wire to obtain paper, and drying the paper by applying heat and thereby also raising the temperature of the microspheres sufficiently for them to expand and increase the bulk of the paper.

The amount of expandable microspheres added with the slurry to the stock is preferably from about 0.1 to about 20 wt%, most preferably from about 0.2 to about 10 wt% dry microspheres of the dry content in the stock. Any kind of paper machine known in the art can be used.

The term "paper", as used herein, is meant to include all types of cellulose-based products in sheet or web form, including, for example, board, cardboard and paper board. The invention has been found particularly advantageous for the production of board, cardboard and paper board, particularly with a basis weight from about 50 to about 1000 g/m², preferably from about 150 to about 800 g/m².

The paper may be produced as a single layer or a multi-layer paper. If the paper comprises three or more layers, the expandable microspheres are preferably not added to the portion of the stock forming any of the two outer layers.

The stock preferably contains from about 50 to about 100 wt%, most preferably from about 70 to about 100 wt% of cellulosic fibres, based on dry material. Before dewatering, the stock besides expandable microspheres, may also contain one or more fillers, e.g. mineral fillers like kaolin, china clay, titanium dioxide, gypsum, talc, chalk, ground marble or precipitated calcium carbonate, and optionally other commonly used additives, such as retention aids, sizing agents, aluminium compounds, dyes, wet-strength resins, optical brightening agents, etc. Examples of aluminium compounds include alum, aluminates and polyaluminium compounds, e.g. polyaluminium chlorides and sulphates. Examples of retention aids include cationic polymers, anionic inorganic materials in combination with organic polymers, e.g. bentonite in combination with cationic polymers or silica-based sols in combination with cationic polymers or cationic and anionic polymers. Examples of sizing agents include cellulose reactive sizes such as alkyl ketene dimers and alkenyl succinic anhydride, and cellulose non-reactive sizes such as rosin, starch and other polymeric sizes like copolymers of styrene with vinyl monomers such as maleic anhydride, acrylic acid and its alkyl esters, acrylamide, etc.

At drying, the paper, and thereby also the microspheres, is preferably heated to a temperature from about 50 to about 150°C, most preferably from about 60 to about 110°C. This results in expansion of the microspheres and thereby also a bulk increase of the paper. The magnitude of this bulk increase depends on various factors, such as the origin of cellulosic fibres and other components in the stock, but is in most cases from about 5 to about 50 % per weight percentage of retained microspheres in the dried paper, compared to the same kind of paper produced without addition of expandable microspheres or any other expansion agent. Any conventional means of drying involving transferring heat to the paper can be applied, such as contact drying (e.g. by heated cylinders), forced convection drying (e.g. by hot air), infrared techniques, or combinations thereof. In the case of contact drying, the temperature of the contact surfaces, e.g. the cylinders, is preferably from about 20 to about 150°C, most preferably from about 30 to about 130°C. The paper may pass a series of several cylinders, e.g. up to 20 or more, of increasing temperature.

The cellulosic fibres in the stock may, for example, come from pulp made from any kind of plants, preferably wood, such as hardwood and softwood. The cellulosic fibres may also partly or fully originate from recycled paper, in which case the invention has been found to give unexpectedly good results.

Another embodiment of the invention concerns a process for the production of non-woven comprising the steps of forming a web of fibres, adding to said web a binder and a slurry comprising expandable microspheres as described above, and forming nonwoven and applying heat to raise the temperature of the microspheres sufficiently for them to expand and thereby increase the bulk nonwoven. The slurry comprising expandable microspheres and the binder may be added separately or as a mixture. The amount of expandable microspheres added is preferably from about 0.1 to about 30 wt% of dried product, most preferably from about 0.5 to about 15 wt% of dried product. The amount of binder added is preferably from about 10 to about 90 wt% of dried product, most preferably from about 20 to about 80 wt% of dried product.

The term "nonwoven" as used herein is meant to include textiles made from fibres bonded together by means of a binder.

The web of fibres can be formed in any conventional way, for example by mechanical or aerodynamical dry methods, hydrodynamical (wet) methods, or spunbonded processes. The binder, preferably pre-mixed with a slurry comprising expandable microspheres, can then be added to the web also in any conventional way, for example by any kind of impregnation method such as immersion of the web in a bath of binder or coating the web by kiss roll application or knife coating with a doctor blade or floating knife.

The web comprising a binder and expandable microspheres can then be heated to a temperature sufficient for the microspheres to expand, preferably from about 70 to about 200°C, most preferably from about 120 to about 160°C. Preferably, curing of the binder takes place at the same time. The heating can be effected by any suitable means, such as contact drying (e.g. by heated cylinders), forced convection drying (e.g. by hot air), infrared techniques, or combinations thereof.

The fibres can be any kind of commercially available fibres, natural fibres, mineral fibres, as well as synthetic inorganic and organic fibres. Examples of useful fibres include polypropylene, polyethylene, polyester, viscose, and polyamide fibres, as well as fibres made from two or more of the above polymers.

The binder can be any kind of natural or synthetic adhesive resin, such as resins of polyacrylates and co-polymers thereof, polymethacrylates and co-polymers thereof, rubber latexes such as styrene/butadiene copolymers, acrylonitrile/butadiene copolymers, poly(vinyl chloride) and copolymers, poly(vinyl ester) such as poly(vinyl acetate) and copolymers, e.g. with ethylene, poly(vinyl alcohol), polyurethane, and aminoplast and phenoplast precondensates such as urea/ formaldehyde, urea/ melamine / formaldehyde or phenol/ formaldehyde.

For various embodiments relating to the slurry the above description of the slurry as such is referred to.

The invention will be further described in connection with the following examples, which, however, are not intended to limit the scope thereof. Unless otherwise stated, all parts and percentages refer to parts and percent by weight.

In all the Examples the expandable microspheres used had a polymer shell of vinylidene chloride and acrylonitrile and about 14 wt% of isobutane as propellant. The volume average diameter was about 13 µm.

The viscosity measurements were made with an Anton Paar DV-1 P viscosimeter equipped with a spindle L3 (measurement range = 180-1200 mPas). The slurry was thoroughly shaken in order to get a homogenous sample and then 200 ml of the slurry was poured into a 250 ml glass beaker. The sample was tempered to 25°C in a water bath, was agitated by means of a propeller (four blades at 45° inclination horizontally) for three minutes, and then allowed to rest for 10 minutes in the tempered water bath. The viscosity was then measured at 100 rpm after exactly 10 minutes.

The pH measurements were made with a MeterLab PHM 210 standard pH meter equipped with a combined pH-electrode, filled with saturated KCI-solution and calibrated prior to use with buffer solutions (from JT Baker) at pH 4.00 and 7.00.

Example 1 (reference): To a slurry containing 40.4 wt% microspheres and 0.5 wt% acetic acid, 1.0 wt% starch (Solvitose™ C5 from Avebe Starches North Europe) was added as a thickener and dissolved during agitation by means of a propeller. A 50 wt% NaOH solution was added to adjust the pH from 2.83 to 3.50 (outside the buffring range of the acetic acid) by means of 50 % NaOH After one day storage at 22°C the viscosity was measured to 660 mPas. The slurry was then stored at 35°C and after 9 weeks the pH was 2.98 and the viscosity 110 mPas. Such a low viscosity involves a high risk that the microspheres settle to a sediment that cannot be fully re-dispersed again.

Example 2: To a slurry containing 39.6 wt% microspheres and 0.5 wt% acetic acid, 1.0 wt% starch (Solvitose™ C5, same as Example 1) was added as a thickener and dissolved during agitation by means of a propeller. Then 0.67 wt% sodium oxalate was added and the pH was adjusted to 3.52 (close to the second pKₐ of the oxalate). After four days storage at 22°C the pH was 3.54 and the viscosity 560 mPas. After another three days (7 days in total) at 22°C the pH was 3.50 and the viscosity 520 mPas. The slurry was then stored at 35°C and after 5 weeks the pH was 3.37 and the viscosity 520 mPas. Such a viscosity is acceptable since even if the microspheres settle to some extent they can easily be re-dispersed again.

Example 3: To a slurry containing 39.6 wt% microspheres and 0.5 wt% acetic acid a polyacrylamide/polyacrylic acid copolymer (Eka DS 84™, a 22 wt% aqueous solution from Eka Chemicals AB) was added as a thickener to provide a polymer content of 4.4 wt%. The thickener was dissolved during agitation. The pH was adjusted to 4.70, which is close to the pKₐ of both the acetic acid and the thickener. After four days storage at 22°C the pH was 4.68 and the viscosity 420 mPas. After another three days (7 days in total) at 22°C the pH was 4.68 and the viscosity 430 mPas. The slurry was then stored at 35°C and after 3 weeks the pH was 4.58 and the viscosity 380 mPas. Such a viscosity is acceptable since even if the microspheres settle to some extent they can easily be re-dispersed again.

## Claims

1. Aqueous slurry comprising a thickener and thermally expandable microspheres comprising a thermoplastic polymer shell and a propellant entrapped therein, said slurry having a pH of at least about 2.5 and comprising a buffer having a pKₐ within about ± 1 pH-unit of the actual pH.

2. Aqueous slurry as claimed in claim 1, wherein the slurry has a pH of at least about 3.

3. Aqueous slurry as claimed in any one of the claims 1-2, wherein the buffer is selected from the group consisting of acids and salts of hydrogen carbonate, dihydrogen phosphate, inorganic derivatives of hydrogen carbonate and hydrogen phosphate, and mixtures thereof.

4. Aqueous slurry as claimed in any one of the claims 1-2, wherein the buffer is selected from the group consisting of acids, bases and salts of carboxylates, amines containing electron releasing groups, polymers having any functional group of carboxylate, phosphate, phosphonate or amine, and mixtures thereof.

5. Aqueous slurry as claimed in any one of the claims 1-4, wherein the thickener is selected from the group consisting of at least partially water soluble polymers having an average molecular weight of at least about 500.

6. Aqueous slurry as claimed in any one of the claims 1-5, wherein the thermoplastic polymer shell of the microspheres is made of a co-polymer from ethylenically unsaturated monomers comprising a vinylidene halide monomer.

7. Aqueous slurry as claimed in any one of the claims 1-6 comprising from about 20 to about 55 wt% of expandable microspheres.

8. Aqueous slurry as claimed in any one of the claims 1-7 comprising from about 0.1 to about 15 wt% of the thickener.

9. Aqueous slurry as claimed in any one of the claims 1-8, wherein the viscosity is from about 150 to about 1000 mPas at 25°C.

10. Process for the preparation of a slurry according to any one of the claims 1-9 comprising adding a polymeric thickener and a buffer, or a combined thickener and buffer, to an aqueous slurry of thermally expandable microspheres comprising a thermoplastic polymer shell and a propellant entrapped therein, and adjusting the pH to a value exceeding about 2.5 and being within about ± 1 pH-unit of a pKₐ of said buffer or combined thickener and buffer.

11. Use of a slurry according to any one of the claims 1- 9 in the production of paper or non-woven for increasing the bulk thereof.

12. Process for the production of paper or nonwoven from fibres comprising the steps of adding a slurry comprising thermally expandable microspheres according to any one of the claims 1-9 to a stock comprising fibres or to a web of fibres, forming paper or nonwoven from the stock or the web, and applying heat to raise the temperature of the microspheres sufficiently for them to expand and thereby increase the bulk of the paper or the nonwoven.

13. Process for the production of paper comprising the steps of adding a slurry comprising thermally expandable microspheres according to any one of the claims 1- 9 to a stock containing cellulosic fibres, dewatering the stock on a wire to obtain paper, and drying the paper by applying heat and thereby also raising the temperature of the microspheres sufficiently for them to expand and increase the bulk of the paper.

## Patentansprüche

1. Wässrige Aufschlämmung, die ein Verdickungsmittel und thermisch expandierbare Mikrosphären, die eine Hülle aus einem thermoplastischen Polymer und ein darin eingeschlossenes Treibmittel umfassen, umfasst, wobei die Aufschlämmung einen pH-Wert von wenigstens etwa 2,5 aufweist und einen Puffer mit einem pKₐ innerhalb etwa ± 1 pH-Einheit vom tatsächlichen pH-Wert umfasst.

2. Wässrige Aufschlämmung gemäß Anspruch 1, wobei die Aufschlämmung einen pH-Wert von wenigstens etwa 3 hat.

3. Wässrige Aufschlämmung gemäß einem der Ansprüche 1 bis 2, wobei der Puffer aus der Gruppe ausgewählt ist, die aus Säuren und Salzen von Hydrogencarbonat, Dihydrogenphosphat, anorganischen Derivaten von Hydrogencarbonat und Hydrogenphosphat und Gemischen davon besteht.

4. Wässrige Aufschlämmung gemäß einem der Ansprüche 1 bis 2, wobei der Puffer aus der Gruppe ausgewählt ist, die aus Säuren, Basen und Salzen von Carboxylaten, Aminen, die elektronenfreisetzende Gruppen enthalten, Polymeren, die irgendeine funktionelle Gruppe von Carboxylat, Phosphat, Phosphonat oder Amin aufweisen, und Gemischen davon besteht.

5. Wässrige Aufschlämmung gemäß einem der Ansprüche 1 bis 4, wobei das Verdickungsmittel aus der Gruppe ausgewählt ist, die aus wenigstens teilweise wasserlöslichen Polymeren mit einem mittleren Molekulargewicht von wenigstens etwa 500 besteht.

6. Wässrige Aufschlämmung gemäß einem der Ansprüche 1 bis 5, wobei die aus thermoplastischem Polymer bestehende Hülle der Mikrosphären aus einem Copolymer aus ethylenisch ungesättigten Monomeren, die ein Vinylidenhalogenid-Monomer umfassen, besteht.

7. Wässrige Aufschlämmung gemäß einem der Ansprüche 1 bis 6, die etwa 20 bis etwa 55 Gew.-% expandierbare Mikrosphären umfasst.

8. Wässrige Aufschlämmung gemäß einem der Ansprüche 1 bis 7, die etwa 0,1 bis etwa 15 Gew.-% des Verdickungsmittels umfasst.

9. Wässrige Aufschlämmung gemäß einem der Ansprüche 1 bis 8, wobei die Viskosität etwa 150 bis etwa 1000 mPa·s bei 25 °C beträgt.

10. Verfahren zur Herstellung einer Aufschlämmung gemäß einem der Ansprüche 1 bis 9, umfassend das Hinzufügen eines polymeren Verdickungsmittels und eines Puffers oder eines kombinierten Verdickungsmittels und Puffers zu einer wässrigen Aufschlämmung von thermisch expandierbaren Mikrosphären, die eine Hülle aus einem thermoplastischen Polymer und ein darin eingeschlossenes Treibmittel umfassen, und Einstellen des pH-Werts auf einen Wert von wenigstens etwa 2,5, der sich innerhalb etwa ± 1 pH-Einheit eines pKₐ-Werts des Puffers oder des kombinierten Verdickungsmittels und Puffers befindet.

11. Verwendung einer Aufschlämmung gemäß einem der Ansprüche 1 bis 9 bei der Herstellung von Papier oder Vliesstoff zur Erhöhung von dessen Volumen.

12. Verfahren zur Herstellung von Papier oder eines Vliesstoffs aus Fasern, umfassend die Schritte des Hinzufügens einer Aufschlämmung, die thermisch expandierbare Mikrosphären umfasst, gemäß einem der Ansprüche 1 bis 9 zu einem Brei, der Fasern umfasst, oder zu einem Faservlies unter Bildung von Papier oder eines Vliesstoffs aus dem Brei oder dem Vlies und des Anwendens von Wärme, um die Temperatur der Mikrosphären ausreichend zu erhöhen, so dass diese expandieren und **dadurch** das Volumen des Papiers oder Vliesstoffs erhöhen.

13. Verfahren zur Herstellung von Papier, umfassend die Schritte des Hinzufügens einer Aufschlämmung, die thermisch expandierbare Mikrosphären umfasst, gemäß einem der Ansprüche 1 bis 9 zu einem Brei, der Cellulosefasern enthält, des Entwässerns des Breis auf einem Sieb unter Bildung von Papier und des Trocknens des Papiers durch Anwenden von Wärme, wodurch auch die Temperatur der Mikrosphären ausreichend erhöht wird, so dass diese expandieren und das Volumen des Papiers erhöhen.

## Revendications

1. Suspension aqueuse comprenant un épaississant et des microsphères expansibles par voie thermique comprenant une coque en polymère thermoplastique, dans laquelle un propulseur est piégé, ladite suspension possédant un pH d'au moins environ 2,5 et comprenant un tampon dont le pKₐ se situe à environ ± 1 unité pH du pH réel.

2. Suspension aqueuse selon la revendication 1, dans laquelle la suspension possède un pH d'au moins environ 3.

3. Suspension aqueuse selon l'une quelconque des revendications 1 à 2, dans laquelle le tampon est choisi dans le groupe constitué par les acides et les sels d'hydrogénocarbonate, de dihydrogénophosphate, de dérivés inorganiques d'hydrogénocarbonate et d'hydrogénophosphate, et leurs mélanges.

4. Suspension aqueuse selon l'une quelconque des revendications 1 à 2, dans laquelle le tampon est choisi dans le groupe constitué par les acides, les bases et les sels de carboxylates, les amines contenant des groupes libérant des électrons, les polymères contenant l'un quelconque des groupes fonctionnels choisis parmi le carboxylate, le phosphate, le phosphonate ou une amine, et leurs mélanges.

5. Suspension aqueuse selon l'une quelconque des revendications 1 à 4, dans laquelle l'épaississant est choisi dans le groupe constitué par les polymères au moins partiellement hydrosolubles possédant un poids moléculaire moyen d'au moins environ 500.

6. Suspension aqueuse selon l'une quelconque des revendications 1 à 5, dans laquelle la coque en polymère thermoplastique des microsphères est composée d'un copolymère obtenu à partir de monomères à insaturations éthyléniques comprenant un monomère d'halogénure de vinylidène.

7. Suspension aqueuse selon l'une quelconque des revendications 1 à 6, comprenant environ 20 à environ 55 % en poids de microsphères expansibles.

8. Suspension aqueuse selon l'une quelconque des revendications 1 à 7, comprenant environ 0,1 à environ 15 % en poids de l'épaississant.

9. Suspension aqueuse selon l'une quelconque des revendications 1 à 8, dans laquelle la viscosité est d'environ 150 à environ 1 000 mPas à 25 °C.

10. Procédé de préparation d'une suspension selon l'une quelconque des revendications 1 à 9, comprenant l'ajout d'un épaississant polymère et d'un tampon, ou d'un épaississant et d'un tampon combinés, à une suspension aqueuse de microsphères expansibles par voie thermique comprenant une coque en polymère thermoplastique dans laquelle un propulseur est piégé, et l'ajustement du pH à une valeur dépassant environ 2,5 et étant située à environ ± 1 unité pH d'un pKₐ dudit tampon ou dudit épaississant et tampon combinés.

11. Utilisation d'une suspension selon l'une quelconque des revendications 1 à 9, dans la production de papier ou de non-tissé pour accroître leur bouffant.

12. Procédé de production de papier ou de non-tissé à partir de fibres, comprenant les étapes consistant à ajouter une suspension comprenant des microsphères expansibles par voie thermique selon l'une quelconque des revendications 1 à 9 à une pâte comprenant des fibres ou à une bande de fibres, former un papier ou un non-tissé à partir de la pâte ou de la bande et appliquer de la chaleur pour augmenter suffisamment la température des microsphères pour les dilater et ainsi augmenter le bouffant du papier ou du non-tissé.

13. Procédé de production de papier comprenant les étapes consistant à ajouter une suspension comprenant des microsphères expansibles par voie thermique selon l'une quelconque des revendications 1 à 9 à une pâte contenant des fibres cellulosiques, épaissir la pâte sur une toile pour obtenir un papier et sécher le papier en appliquant de la chaleur, ce qui augmente également suffisamment la température des microsphères pour les dilater et accroît le bouffant du papier.
